# EUROPEAN PATENT APPLICATION

(11) **EP 1 985 674 A1**
(43) Date of publication of application: **29.10.2008**
(21) Application number: 07107170.8
(22) Date of filing: 27.04.2007
(51) Int. Cl.: C09D 133/00, C08L 33/02, C09D 167/00

(54) **Polymer Compositions**

(71) Applicant: CYTEC SURFACE SPECIALTIES, S.A., 1070 Brussels (BE)
(72) Inventor: Moens, Luc, 1640, Sint-Genesius-Rode (BE)
(74) Representative: Destryker, Elise Martine

(57) **Abstract**

There is described a powder composition curable by radiation and thermally, comprising a mixture of (a) from about 1% to about 15%, by weight of the total composition, of a polyester of Tg ≤ 40°C obtained and/or obtainable by reacting, (i) an acid component comprising (A) from about 70 to about 100 mol % of a first poly carboxylic acid; and (B) from about 0 to about 30 mol % of an optional second poly carboxylic acid different from the first poly carboxylic acid; with (ii) an alcohol component comprising (A) from about 70 to about 100 mol % of a first polyol; and (B) from about 0 to about 30 mol % of an optional second polyol different from the first polyol; and optionally with (iii) one or more glycidyl (meth)acrylate(s), hydroxy functional (meth)acrylate(s) and/or polyisocyanate(s); (b) from about 85% to about 99%, by weight of the total composition, of a copolymer comprising at least one activated unsaturated moiety (such as an acrylic copolymer); and (c) a hardener capable of reacting with the acrylic copolymer and/or the polyester when heated.

## Description

The present invention relates to the field of powder compositions comprising mixtures of polyesters and copolymers containing ethylenically unsaturated groups (such as acrylic copolymers). The present invention also relates to the preparation and use of these compositions.

Because of their many advantages powder compositions are widely used as paints and varnishes for coating a diverse range of objects. They are entirely solvent free, eliminating the problem of handling solvents. There is no waste as excess powder is not retained on the substrate to be coated, but is fully recoverable and reusable.

Most powder compositions are currently cured thermally by heating. Thermosetting powders generally contain heat-curable organic compounds as a binder together with fillers, pigments, catalysts and/or other additives to adapt the composition's properties to the desired end use. The most common heat-curable binders comprise mixtures of polyesters containing carboxyl groups or hydroxyl groups; acrylic copolymers carrying glycidyl, carboxyl or hydroxyl groups, and the like; and cross-linking agents containing functional groups capable of reacting with these functional polymers.

However thermosetting powders have disadvantages for some uses as they may cure at too high a temperature and take to too long to cure. To address this powder compositions curable by ultraviolet radiation and/or electron beam have been introduced, where for example the binder comprises unsaturated acrylic copolymers. Some examples of known radiation curable powder compositions are described below.

WO 93/25596 (DSM) describes a powder of low viscosity and low glass transition temperature (Tg) which is easily spread onto a substrate by melting the powder at 100 and 150°C for 10 to 30 minutes and then irradiating to obtain a flexible coating thereon.

WO 98/18874 (filed by the applicant's predecessor company UCB) describes radiation curable powder coatings that comprises as a binder a mixture of semi-crystalline polyesters containing end methacryloyl groups and acrylic copolymers containing ethylenically unsaturated groups, preferably acryloyl or methacryloyl groups.

US 6780897 (BASF) describes radiation curable powder compositions, the specific examples of which comprise (meth)acrylate copolymers.

Radiation curable powder compositions produce coatings at low temperatures which flow well to create a good finish and which have good physical and chemical properties.

However to achieve these improved properties the coating must be properly irradiated as areas which are insufficiently irradiated will contain uncured coating with inferior properties. This can be an issue with objects of irregular shape where it is difficult to uniformly irradiate interior surfaces of the object.

The aim of the present invention is to provide improved novel powder compositions that are curable by both radiation and heat (dual cure) so solving some or all of the preceding problems with prior art compositions.

Therefore broadly in accordance with the present invention there is provided a powder composition curable by radiation and thermally, comprising a mixture of
(a) from about 1% to about 15% by weight of the total composition, of a polyester having a glass transition temperature (Tg) less than or equal to about 40°C, where the polyester is obtained and/or obtainable by reacting,
   (i) an acid component comprising:
      (A) from about 70 to about 100 mol % of a first poly carboxylic acid; and
      (B) from about 0 to about 30 mol % of an optional second poly carboxylic acid different from the first poly carboxylic acid;
      with
   (ii) an alcohol component comprising
      (A) from about 70 to about 100 mol % of a first polyol; and
      (B) from about 0 to about 30 mol % of an optional second polyol different from the first polyol;
      and optionally with
   (iii) one or more functional monomer(s) selected from:
      glycidyl (meth)acrylate(s), hydroxy functional (meth)acrylate(s), polyisocyanate(s) and/or suitable mixtures thereof;
(b) from about 85% to about 99% by weight of the total composition, of one or more copolymer comprising at least one activated unsaturated moiety; and
(c) a hardener capable of reacting with the unsaturated copolymer and/or the polyester when heated.

Powder compositions of the invention thus comprise the polyester component (a), the copolymer (b) with activated unsaturated groups (such as an acrylic copolymer and/or other ethylenically unsaturated oligomer) and optionally the thermosetting hardener (c). They may be radiation cured by ultraviolet irradiation or by accelerated electron beams. They may also be cured by heat to activate the thermosetting reaction. Preferred powder compositions of the invention comprise a binder which may comprise a mixture of at least one (optionally semi-crystalline) polyester having terminal methacryloyl groups and at least one acrylic copolymer comprising ethylenically unsaturated groups (such as acryloyl or methacryloyl groups). Powder compositions of the present invention can be used to produce paint and varnish coatings with a unique array of properties, for example excellent hardness and flexibility, very good resistance to solvents and good storage-stability.

### Definitions

As used above 'mol %' denotes the mole fraction within the various components (i) and (ii) [i.e. acid component and alcohol components] of the first and second polyacids and polyols therein, the total of which within each component does not exceed 100%. It will be further appreciated that if the acid component (i) and/or alcohol component (ii) contain additional acid and/or polyol ingredients the mol % of (i)(A) plus (i)(B); and/or of (ii)(A) plus (ii)(B) will total less that 100%.

As used herein 'radiation-curable' denotes a material which will polymerize when irradiated for example with actinic radiation and/or ultraviolet (UV) light (optionally in the presence of another ingredient such as a photo-initiator) and/or ionizing radiation (such as electron-beam). Actinic radiation is electromagnetic radiation capable of producing photochemical action, but of insufficient energy to product ions in a medium of common materials and usually has a wavelength of greater than 185 nanometres. UV light is radiant energy having a wavelength from 180 to 400 nanometres (1.8 to 4.0 x 10⁻⁷ meters). Ionizing radiation is particle or electromagnetic energy capable of producing ions in common materials; usually energies of greater than about 10 electron volts or 16 x 10⁻¹⁹ joules. Electron beam (e-beam) is a beam of electrons typically displaced from a metallic filament by a high voltage source of acceleration. Preferred methods to achieve radiation polymerization comprise UV light and/or e-beam. The polymerization mechanism can be any suitable method that can be induced by radiation (e.g. free radical, cationic etc).

The synonymous terms 'organic substituent' and "organic group" as used herein (also abbreviated herein to "organo") denote any univalent or multivalent moiety (optionally attached to one or more other moieties) which comprises one or more carbon atoms and optionally one or more other heteroatoms. Organic groups may comprise organoheteryl groups (also known as organoelement groups) which comprise univalent groups containing carbon, which are thus organic, but which have their free valence at an atom other than carbon (for example organothio groups). Organic groups may alternatively or additionally comprise organyl groups which comprise any organic substituent group, regardless of functional type, having one free valence at a carbon atom. Organic groups may also comprise heterocyclyl groups which comprise univalent groups formed by removing a hydrogen atom from any ring atom of a heterocyclic compound: (a cyclic compound having as ring members atoms of at least two different elements, in this case one being carbon). Preferably the non carbon atoms in an organic group may be selected from: hydrogen, halo, phosphorus, nitrogen, oxygen, silicon and/or sulphur, more preferably from hydrogen, nitrogen, oxygen, phosphorus and/or sulphur. Convenient phosphorous containing groups may comprise: phosphinyl (i.e. a '-PR₃' radical where R independently denotes H or hydrocarbyl); phosphinic acid group(s) (i.e. a '-P(=O)(OH)₂' radical); and phosphonic acid group(s) (i.e. a '-P(=O)(OH)₃' radical).

Most preferred organic groups comprise one or more of the following carbon containing moieties: alkyl, alkoxy, alkanoyl, carboxy, carbonyl, formyl and/or combinations thereof; optionally in combination with one or more of the following heteroatom containing moieties: oxy, thio, sulphinyl, sulphonyl, amino, imino, nitrilo and/or combinations thereof. Organic groups include all chemically possible combinations in the same moiety of a plurality (preferably two) of the aforementioned carbon containing and/or heteroatom moieties (e.g. alkoxy and carbonyl if directly attached to each other represent an alkoxycarbonyl group).

The terms 'optional substituent' and/or 'optionally substituted' as used herein (unless followed by a list of other substituents) signifies the one or more of following groups (or substitution by these groups): carboxy, sulpho, formyl, hydroxy, halo, amino, imino, nitrilo, mercapto, cyano, nitro, methyl, methoxy and/or combinations thereof. These optional groups include all chemically possible combinations in the same moiety of a plurality (preferably two) of the aforementioned groups (e.g. amino and sulphonyl if directly attached to each other represent a sulphamoyl group). Preferred optional substituents comprise: carboxy, sulpho, hydroxy, amino, mercapto, cyano, methyl, chloro, fluro, trihalomethyl and/or methoxy.

The term 'hydrocarbo group' as used herein is a sub set of a organic group and denotes any univalent or multivalent moiety (optionally attached to one or more other moieties) which consists of one or more hydrogen atoms and one or more carbon atoms and may comprise one or more saturated, unsaturated and/or aromatic moieties. Hydrocarbo groups may comprise one or more of the following groups. Hydrocarbyl groups comprise univalent groups formed by removing a hydrogen atom from a hydrocarbon (for example alkyl). Hydrocarbylene groups comprise divalent groups formed by removing two hydrogen atoms from a hydrocarbon, the free valencies of which are not engaged in a double bond (for example alkylene). Hydrocarbylidene groups comprise divalent groups (which may be represented by "R₂C=") formed by removing two hydrogen atoms from the same carbon atom of a hydrocarbon, the free valencies of which are engaged in a double bond (for example alkylidene). Hydrocarbylidyne groups comprise trivalent groups (which may be represented by "RC≡"), formed by removing three hydrogen atoms from the same carbon atom of a hydrocarbon the free valencies of which are engaged in a triple bond (for example alkylidyne). Hydrocarbo groups may also comprise saturated carbon to carbon single bonds (e.g. in alkyl groups); unsaturated double and/or triple carbon to carbon bonds (e.g. in respectively alkenyl and alkynyl groups); aromatic groups (e.g. in aryl groups) and/or combinations thereof within the same moiety and where indicated may be substituted with other functional groups

The term 'alkyl' or its equivalent (e.g. 'alk') as used herein may be readily replaced, where appropriate and unless the context clearly indicates otherwise, by terms encompassing any other hydrocarbo group such as those described herein (e.g. comprising double bonds, triple bonds, aromatic moieties (such as respectively alkenyl, alkynyl and/or aryl) and/or combinations thereof (e.g. aralkyl) as well as any multivalent hydrocarbo species linking two or more moieties (such as bivalent hydrocarbylene radicals e.g. alkylene).

Any radical group or moiety mentioned herein (e.g. as a substituent) may be a multivalent or a monovalent radical unless otherwise stated or the context clearly indicates otherwise (e.g. a bivalent hydrocarbylene moiety linking two other moieties). However where indicated herein such monovalent or multivalent groups may still also comprise optional substituents. A group which comprises a chain of three or more atoms signifies a group in which the chain wholly or in part may be linear, branched and/or form a ring (including spiro and/or fused rings). The total number of certain atoms is specified for certain substituents for example C_{1-N}hydrocarbo, signifies a organo moiety comprising from 1 to N carbon atoms. In any of the formulae herein if one or more substituents are not indicated as attached to any particular atom in a moiety (e.g. on a particular position along a chain and/or ring) the substituent may replace any H and/or may be located at any available position on the moiety which is chemically suitable and/or effective.

Preferred organo and/or hydrocarbo moieties described as substituents herein comprise from 1 to 36, more preferably from 1 to 18, most preferably from 1 to 12 carbon atoms. It is particularly preferred that the number of carbon atoms is from 1 to 10, for example from 1 to 4.

As used herein chemical terms (other than IUAPC names for specifically identified compounds) which comprise features which are given in parentheses - such as (alkyl)acrylate, (meth)acrylate and/or (co)polymer denote that that part in parentheses is optional as the context dictates, so for example the term (meth)acrylate denotes both methacrylate and acrylate, the term (meth)acryloyl denotes acryloyl and/or methacryloyl groups.

Polymers of the present invention may be prepared by one or more suitable other polymer precursor(s) to those described herein which may be organic and/or inorganic and comprise any suitable (co)monomer(s), (co)polymer(s) [including homopolymer(s)] and mixtures thereof which comprise moieties which are capable of forming a bond with the or each polymer precursor(s) to provide chain extension and/or cross-linking with another of the or each polymer precursor(s) via direct bond(s) as indicated herein.

Polymer precursors of the invention may comprise one or more monomer(s), oligomer(s), polymer(s); mixtures thereof and/or combinations thereof which have suitable polymerisable functionality.

As used herein the term 'monomer' denotes a substantially monodisperse compound of a low molecular weight (for example less than one thousand daltons) which is capable of being polymerised.

As used herein 'polymer' denotes a polydisperse mixture of macromolecules of large molecular weight (for example many thousands of daltons) prepared by a polymerisation method, where the macromolecules comprises the multiple repetition of smaller units (which may themselves be monomers, oligomers and/or polymers) and where (unless properties are critically dependent on fine details of the molecular structure) the addition or removal one or a few of the units has a negligible effect on the properties of the macromolecule.

As used herein 'oligomer' denotes a polydisperse mixture of molecules having an intermediate molecular weight between a monomer and polymer, the molecules comprising a small plurality of monomer units the removal of one or a few of which would significantly vary the properties of the molecule.

Depending on the context the term polymer may or may not encompass oligomer.

The polymer precursor of and/or used in the invention may be prepared by direct synthesis or (if the polymeric precursor is itself polymeric) by polymerisation. If a polymerisable polymer is itself used as a polymer precursor of and/or used in the invention it is preferred that such a polymer precursor has a low polydispersity, more preferably is substantially monodisperse, to minimise the side reactions, number of by-products and/or polydispersity in any polymeric material formed from this polymer precursor. The polymer precursor(s) may be substantially un-reactive at normal temperatures and pressures.

Except where indicated herein polymers and/or polymeric polymer precursors of and/or used in the invention can be (co)polymerised by any suitable means of polymerisation well known to those skilled in the art. Examples of suitable methods comprise: thermal initiation; chemical initiation by adding suitable agents; catalysis; and/or initiation using an optional initiator followed by irradiation, for example with electromagnetic radiation (photo-chemical initiation) at a suitable wavelength such as UV; and/or with other types of radiation such as electron beams, alpha particles, neutrons and/or other particles.

The substituents on the repeating unit of a polymer and/or oligomer may be selected to improve the compatibility of the materials with the polymers and/or resins in which they may be formulated and/or incorporated for the uses described herein. Thus the size and length of the substituents may be selected to optimise the physical entanglement or interlocation with the resin or they may or may not comprise other reactive entities capable of chemically reacting and/or cross linking with such other resins as appropriate.

The terms 'effective', 'acceptable' 'active' and/or 'suitable' (for example with reference to any process, use, method, application, preparation, product, material, formulation, compound, monomer, oligomer, polymer precursor, and/or polymers of the present invention and/or described herein as appropriate) will be understood to refer to those features of the invention which if used in the correct manner provide the required properties to that which they are added and/or incorporated to be of utility as described herein. Such utility may be direct for example where a material has the required properties for the aforementioned uses and/or indirect for example where a material has use as a synthetic intermediate and/or diagnostic tool in preparing other materials of direct utility. As used herein these terms also denote that a functional group is compatible with producing effective, acceptable, active and/or suitable end products. The utility of the compositions of the present invention is as powder composition curable both thermally and by irradiation (dual cure).

### Polyester

Preferred powder compositions of the invention comprise the polyester obtained and/or obtainable as described above, in an amount of from about 3% to about 10% by weight of the total composition.

Preferred polyesters for use in powder compositions of the invention have a T_{g} ≤ about 35°C, more preferably ≤ about 25°C. The glass transition temperature (Tg) denoted herein are determined by differential scanning calorimetry (or DSC) according to ASTM standard D 3418 82. The polyesters may exhibit any suitable morphology, but semi-crystalline polyesters are preferred.

Partially or completely (meth)acryloyl functionalized polyesters suitable for use in the present invention may be obtained as described herein. One embodiment of suitable polyester for use herein is that obtained by partial or complete (meth)acrylation of a hydroxy and/or carboxy functional semi-crystalline polyester derived from 1,12 dodecanedioic acid and ethylene glycol. Suitable polyesters for use herein may also be obtained by other means. For example suitable semi-crystalline hydroxy, carboxy and/or (meth)acryloy functionalised polyesters are described in US 6384102 (the contents of which are hereby incorporated herein by reference).

The polyesters used in the present invention may also exhibit some or all of the following additional properties:
a degree of end unsaturation from about 0.0 to about 2.0, preferably from about 0.35 to about 1.50, milliequivalents of double bonds per gram of polyester;
an acid number from about 0 to about 200 mg KOH / g ;
an hydroxy number from about 0 to about 200 mg KOH / g.
a number-average molecular weight from about 1000 to about 20000 daltons, preferably from about 1400 to about 8500 daltons, as measured by gel permeation chromatography (or GPC), and/or
a viscosity of less than or equal to about 10 Pa s at 175°C, as measured by the cone/ plate method (Brookfield viscosity) according to ASTM standard D 4287 88.

The polyesters used in the powder compositions of the present invention may be prepared from polyacids and/or polyols as described below.

### Poly acid

As used herein the term 'poly carboxylic acid' denotes an organo acid moiety comprising a plurality of carboxylic acid groups. Useful polyacids comprise two carboxy groups in which case the polyacid is also referred to herein as a dicarboxylic acid.

Advantageously the first poly carboxylic acid is present in the acid component in an amount from about 85 to about 100 mol %.

Useful first polyacids may be saturated, aliphatic straight-chain dicarboxylic acids, aromatic dicarboxylic acids and/or cycloaliphatic dicarboxylic acids.

Preferably the first poly carboxylic acid comprises a dicarboxylic acid, more preferably is a C₄₋₂₀dicarboxylic acid, most preferably is an optionally substituted a C₄₋₁₄hydrocarbo dicarboxylic acid.

Conveniently the first polyacid comprises: a C₄₋₈hydrocarbocyclic dicarboxylic acid and/or C₄₋₁₄hydrocarbylene dicarboxylic acid; more conveniently a C₆₋₈hydrocarbocyclic dicarboxylic acid and/or a C₄₋₁₂alkylene dicarboxylic acid; most conveniently a benzene dicarboxylic acid, a cyclohexane dicarboxylic acid and/or a C₄₋₁₀ alkylene dicarboxylic acid.

Specific examples of the first polyacid are: 1,4 benzene dicarboxylic acid (terephthalic acid); 1,4 cyclohexane dicarboxylic acid; adipic acid, and/or 1,12-dodecanedioic acid.

Preferably the second poly carboxylic acid is present in the acid component in an amount from about 0 to about 15 mol %.

Preferably the second polyacid comprises any of those acids described herein as suitable for the first polyacid, for example an aliphatic, cycloaliphatic and/or aromatic C₄₋₁₄carboxylic acid with a plurality of carboxy groups. It is preferred that the first and second polyacid (where present) are different.

### Polyol

As used herein the term 'polyol' denotes an organo alcohol moiety comprising a plurality of hydroxy groups. Preferred polyols comprise two hydroxy groups in which case the polyol is also referred to herein as a diol.

Advantageously the first polyol is present in the alcohol component in an amount from about 85 to about 100 mol %.

Useful first polyols may be saturated, straight chain aliphatic and/or cycloaliphatic diols.

Preferably the first polyol comprises a diol, more preferably is a C₂₋₃₀ diol, most preferably is an optionally substituted C₂₋₂₀ hydrocarbo diol.

Conveniently the first polyol comprises a C₂₋₁₅ hydrocarbo diol, more conveniently a C₂₋₁₀ hydrocarbylene diol, most conveniently a C₂₋₆ alkylene diol.

Specific examples of the first polyol are: ethylene glycol, neopentylglycol (NPG) and/or trimethylolpropane.

Preferably the second polyol is present in the alcohol component in an amount from about 0 to about 15 mol %.

Preferably the second polyol comprises any of those polyols described herein as suitable for the first polyol, for example at least one other aliphatic and/or cycloaliphatic C₂₋₁₅alcohol. with a plurality of hydroxy groups. It is preferred that the first and second polyol (where present) are different.

The process conditions used to prepare the polyesters used in the present invention are otherwise conventional and well known to those skilled in the art. Esterification may occur in one or multiple steps with suitable esterification catalysts such as described in WO 98/18874 (for example page 11, line 16 to page 12 line 8). A process for preparing polyesters comprising (meth)acryloyl groups is also described on page 12 line 9 to page 12 line 28 of this document, the whole contents of which are hereby incorporated by reference.

### Optional functional monomers

Where present the optional glycidyl (meth)acrylate(s) may react with the acid functional polyester. Preferred glycidyl (meth)acrylates comprise: glycidyl methacrylate (GMA).

Where present the optional hydroxy functional (meth)acrylate(s) and/or polyisocyanate(s) monomer may react with the hydroxy functional polyesters. Preferred hydroxy functional (meth)acrylates and/or polyisocyanates comprise 2- hydroxy ethyl methacrylate (HEMA) and/or isophorone di-isocyanate (IPDI).

### Unsaturated co-polymer

Preferred powder compositions of the invention comprise the copolymer comprising at least one activated unsaturated moiety, in an amount of from about 90% to about 97% by weight of the total composition.

The term "activated unsaturated moiety" "is used herein to denote a species comprising at least one unsaturated carbon to carbon double bond in chemical proximity to at least one activating moiety. Conveniently the activating moiety comprises oxy, thio, (optionally organo substituted)amino, thiocarbonyl and/or carbonyl groups (the latter two groups optionally substituted by thio, oxy or (optionally organo substituted) amino). More convenient activating moieties are (thio)ether, (thio)ester and/or (thio)amide moiet(ies). Most convenient "activated unsaturated moieties" comprise an "unsaturated ester moiety" which denotes an organo species comprising one or more "hydrocarbylidenylcarbonyloxy" and/or one or more "hydrocarbylidenylcarbonyl(organo)amino" groups and/or analogous and/or derived moieties for example moieties comprising (meth)acrylate functionalities and/or derivatives thereof. "Unsaturated ester moieties" may optionally comprise optionally substituted generic alpha, beta-unsaturated acids, esters and/or other derivatives thereof including thio derivatives and analogs thereof.

Preferably copolymer (b) comprises one or more acrylic polymer(s), other suitable ethylenically unsaturated oligomer(s), and/or suitable combinations and/or mixtures thereof.

Acrylic (co)polymer as used herein denotes a polymer comprising one or more repeat units of formula: 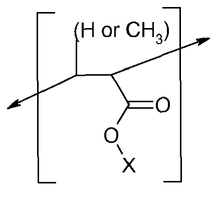 where X denotes H or any suitable organo or other group. If the acrylic polymer comprises other repeat units it is an acrylic copolymer. It will be appreciated that some but not necessarily all the suitable ethylenically unsaturated oligomers described herein may comprise and/or also be used to obtain acrylic (co)polymers.

### Ethylenically unsaturated oligomers

The ethylenically unsaturated oligomer(s) described herein may comprise and/or be used to obtain the unsaturated copolymer (b). The ethylenically unsaturated oligomer(s) may also comprise a further component (d) of the powder composition of the invention in addition to components (a), (b) and (c). Optional component (d) may be mixed in separate step or simultaneously with components (a) to (c)) to form the powder compositions of the invention.

Preferred ethylenically unsaturated oligomer(s) may be selected from:
tri(meth)acrylate(s) of hydroxy substituted alkyl isocyanurate(s);
epoxy (meth)acrylates, such as those obtained and/or obtainable by reacting an epoxy functional compound with (meth)acrylic acid(s);
urethane (meth)acrylates, such as those obtained and/or obtainable by reacting (i) organic poly-isocyanate(s) with hydroxy substituted hydrocarbyl(meth)acrylate(s) and optionally mono or polyhydroxylated alcohols; and/or
suitable mixtures thereof.

Examples of suitable ethylenically unsaturated oligomer(s) may be selected from:
tri(meth)acrylates of tris(2-hydroxyethyl)isocyanurate,
the epoxy (meth)acrylates formed by reacting the diglycidyl ether of Bisphenol A with (meth)acrylic acid,
the urethane acrylate formed by reacting hydroxyethylacrylate with toluene di-isocyanate (and/or isophorone di-isocyanate) and glycerol.

The ethylenically unsaturated oligomers described above comprise polymerisable double bounds that may be curable by irradiation. Powder compositions of the invention may comprise up to about 30%, preferably up to about 15% by weight of these ethylenically unsaturated oligomers, the amount depending on the end use of the powder composition.

### Acrylic copolymers

A preferred copolymer comprising activated unsaturated moie(ties) may comprise a first acrylic copolymer.

The first acrylic copolymer may be obtained and/or obtainable by reacting a second acrylic copolymer with a further (fourth) polymer precursor where:
(i) the second acrylic copolymer is obtained and/or obtainable by reacting
   (A) from about 40 % to about 95 mol % of at least one first polymer precursor comprising a (meth)acryloyl group;
   (B) from about 5% to about 60 mol % of at least one second polymer precursor comprising an ethylenically unsaturated group; and
   (C) a third component selected from:
      at least one, polymerization initiator (PI);
      optionally at least one chain transfer agent (CTA) and
      from about 5% to about 60 mol %, of at least one third polymer precursor comprising
         a) an ethylenically unsaturated group; and
         b) a first reactive moiety capable of undergoing an addition and/or condensation reaction with the further (fourth) polymer precursor, optionally the first reactive moiety being selected from: epoxy, carboxy, hydroxy and/or isocyanato groups,
   where the mol % of the first (A), second (B) and third (C) polymer precursors above are calculated with respect to the total amount of the first and second polymer precursors ((A) and (B)); and where
(ii) the further (fourth) polymer precursor comprises
   a) one or more ethylenically unsaturated group(s); and
   b) a second reactive moiety capable of undergoing an addition and/or condensation reaction with the first reactive moiety of the third polymer precursor that formed, or was capable of forming, the second acrylic copolymer.

The copolymers described herein comprise ethylenically unsaturated groups, (preferably (meth)acryloyl groups) together with other functional groups as also described.

The copolymers preferably are characterised as follows (depending on which of these optional functional groups are present):
a degree of ethylenic unsaturation from about 0.35 to about 3.5, more preferably from about 0.5 to about 2.5 milliequivalents of double bond per gram of acrylic copolymer;
an acid number from about 5 to about 100 mg KOH / g;
an hydroxyl number from about 5 to about 100 mg KOH / g;
an epoxy value from about 0.09 to about 4.0 milliequivalents / g; and/or
an isocyanate value from about 0.9 to about 2 milliequivalents / g .

In addition, these copolymers may exhibit one or more, preferably all, the following additional optional characteristics:
a number-average molecular weight (Mₙ), measured by gel permeation chromatography (GPC), from about 1 to about 8, preferably from about 2000 to about 8000 daltons;
a glass transition temperature (Tg), measured by DSC, from about 45° to about 100°C; and/or
a viscosity, measured at 125°C by the cone/plate method (Brookfield viscosity) according to ASTM standard D 4287 88, from about 10 to about 100 Pa.s.

The functionalised first acrylic copolymer used in the present invention may be prepared in two steps. The first step may be a radical (co)polymerization using two (optionally three) different polymer precursors (first, second and third). Embodiments of each type of polymer precursor are further described below.

### First step

### (preparing second acrylic copolymer from first & second polymer precursors & third component)

### First polymer precursor

In one embodiment the first polymer precursor comprises one acryloyl and/or methacryloyl group.

Preferred first polymer precursors comprise a (meth)acrylate optionally substituted by one or more optionally substituted C₁₋₈hydrocarbo, polysiloxane and/or caprolactone group(s).

More preferred first polymer precursors comprise: (meth)acrylate monomers optionally substituted by one or more: methyl, ethyl, propyl, n-butyl, isobutyl, tert-butyl, 2-ethylhexyl, stearyl, tridecyl, cyclohexyl, benzyl, phenyl, dimethylaminoethyl, diethylaminoethyl, isobornyl, polysiloxane and/or caprolactone

The first polymer precursor may comprise a single monomer, but generally a mixture of monomers is preferred.

Conveniently the total amount of first polymer precursor used to prepare the second acrylic copolymer is from about 40 to about 95 mol %, more conveniently from about 50 to about 95 mol %, calculated with respect to the total amount of the first and second polymer precursors.

### Second polymer precursor

In another embodiment the second polymer precursor comprises an ethylenically unsaturated compound. It is also preferred that the second polymer precursor is different from the first polymer precursor.

Preferred second polymer precursors comprise one or more optionally substituted C₄₋₂₀hydrocarbylene and/or C₆₋₂₀hydrocarbo aromatic compounds (usefully the optionally substituent being cyano; amine and/or carbonyl).

More preferred second polymer precursors comprise: styrene, alpha-methylstyrene, vinyltoluene, acrylonitrile, methacrylonitrile, vinyl acetate, vinyl propionate, acrylamide, methacrylamide, methylolmethacrylamide, vinyl chloride, vinyl ethylene, vinyl propylene and/or C₄₋₂₀olefins.

The second polymer precursor may comprise a single monomer, but generally a mixture of monomers is preferred.

Conveniently the total amount of second polymer precursor used to prepare the second acrylic copolymer is from about 5 to about 60 mol %, more conveniently from about 5 to about 50 mol %, calculated with respect to the total amount of the first and second polymer precursors.

### Third component

The second acrylic copolymer may also be prepared from a third component which comprise a polymerization initiator (PI), a charge transfer agent (CTA), third polymer precursor and any suitable mixtures thereof. It is preferred that the third component comprises at least some of the third polymer precursor.

In another embodiment the third component may comprise a third polymer precursor comprising an ethylenically unsaturated compound different from the first and the second polymer precursors. The third polymer precursor also comprises a first reactive moiety which comprises a functional group capable of undergoing an addition or condensation reaction with the further (fourth) polymer precursor.

Conveniently the functional group may comprise: glycidyl, carboxyl, hydroxyl and/or isocyanato groups.

Preferred third polymer precursors comprise one of more of the following monomers: glycidyl (meth)acrylate, (meth)acrylic acid, hydroxyethyl (meth)acrylate, 2-isocyanatoethyl (meth)acrylate, (meth)acryloyl isocyanate, 1-(1-isocyanato-1-methylethyl)-3 -(1-methylethenyl) benzene, maleic anhydride , and/or tetrahydrophthalic anhydride

Conveniently, if present, the total amount of third polymer precursor that may be used to prepare the second acrylic copolymer is from about 5 to about 60 mol %, more conveniently from about 5 to about 50 mol % calculated with respect to the total amount of the first and second polymer precursors.

The third component may also comprise a PI and/or CTA, preferably in combination the third polymer precursor. Where present PI and/or CTA may usefully comprise one of the functional groups described above as suitable for the first reactive moiety of third polymer precursor. However it is preferred not to use Pl or CTA components unless absolutely necessary as they are expensive.

Suitable Pls (that comprise functional groups) may be selected from: 4,4'-azobis(2-cyanovaleric acid), (which will introduce a carboxyl group into the chain of the second acrylic copolymer) and/or 2,2'-azobis[2-methyl-N-(2-hydroxyethyl)propionamide], (which will introduce a hydroxyl group into the chain of the acrylic copolymer).

Suitable CTAs (that comprise functional groups) may be selected from 3-mercaptopropionic acid and/or 3-mercapto-1-propanol.

### Second step

### (preparing first acrylic copolymer from second acrylic copolymer & further (4^{th}) polymer precursor)

In the second stage of preparation of the first acrylic copolymer, the second acrylic copolymer carrying functional groups introduced by the third component is reacted with a further polymer precursor. The further (fourth) polymer precursor comprises both an activated ethylenically unsaturated group and a second reactive moiety capable of undergoing an addition or condensation reaction with the first reactive moiety of the second acrylic copolymer (introduced therein by the third component).

The further (fourth) polymer precursor may optionally be selected from the same monomers as suitable for the third polymer precursor. However as the first and second reactive moieties must be capable of reacting with each other the third and fourth polymer precursors (monomers) will generally not be the same (unless they comprise multiple functional groups). For example if the second acrylic copolymer comprises a glycidyl group (e.g. introduced by a glycidyl group on the third monomer), a suitable choice for the fourth monomer might be an acrylic or methacrylic acid to react with the glycidyl. Alternatively if the second acrylic copolymer comprises carboxy groups (e.g. introduced by acrylic or methacrylic acid as the third monomer), a suitable choice for the fourth monomer could be glycidyl or alpha-methylglycidyl (meth)acrylate. Similarly a second acrylic copolymer comprising an isocyanato group might suitably react with fourth monomer(s) such as hydroxyethyl (meth)acrylate(s) or similar.

Therefore with the above proviso preferred fourth polymer precursors comprise one or more of the monomers described for as suitable for the third polymer precursors. More preferred fourth monomers are those in which the activated ethylenically unsaturated group is (meth)acryloyl.

A further embodiment of the invention provides a powder composition of the invention where the further (fourth) polymer precursor is selected from the group consisting of any of the polymer precursors described herein for the third polymer precursor, with the proviso that the third and fourth polymer precursors are different and comprise groups capable of reacting with each other.

Most preferred fourth monomers comprise: glycidyl (meth)acrylate; (meth)acrylic acid, hydroxyethyl (meth)acrylate; 2-isocyanatoethyl methacrylate, methacryloyl isocyanate, 1-(1-isocyanato-1-methylethyl)-3-(1-methylethenyl)benzene, maleic anhydride and/or tetrahydrophthalic anhydride. The specific choice of these fourth monomer(s) depends of course on the functionality of the second acrylic copolymer.

Preferably the degree of conversion of the first reactive moieties of the second acrylic copolymer after reaction with the fourth monomer is from about 50 to about 95%

The process conditions used to prepare the first and second acrylic copolymers used in the present invention are otherwise conventional and well known to those skilled in the art. Polymerization may occur in one or multiple steps with suitable catalysts such as described in WO 98/18874 (for example page 13, line 9 to page 14 line 2).

### Hardener

The hardener used to prepare compositions of the present invention may comprise any thermosetting hardener having functional groups reactable with the functional groups present in either or both of the other components of the composition (the polyester and/or the unsaturated copolymer).
Thermosetting hardeners suitable for the present invention are well known to those skilled in the art.

For example the hardener may be selected from any comprising the following functional groups:
at least two glycidyl- or beta-hydroxyalkylamide groups capable of reacting with carboxy groups on the first acrylic copolymer and/or a partially (meth)acrylated polyester;
at least two carboxylic acid groups capable of reacting with epoxy (preferably glycidyl) groups on the first acrylic copolymer;
at least two blocked or non-blocked isocyanate groups capable of reacting with hydroxy groups on the first acrylic copolymer and/or a partially (meth)acrylated polyester; and/or
at least two hydroxyl groups capable of reacting with isocyanate groups on the first acrylic copolymer.

### Hardeners that react with carboxy

Hardeners that comprise groups that react with carboxylic acids in the composition may be selected from: polyepoxy compounds, compounds comprising beta-hydroxyalkylamide moiet(ies) and/or mixtures thereof.

Preferred polyepoxy compounds are solid at room temperature and comprise at least two epoxy groups per molecule.
More preferred polyepoxides are selected from:
triglycidyl isocyanurates (such as that available commercially under the trade mark Araldite® PT810);
blends of diglycidyl terephthalate and triglycidyl trimellitates (such as those available commercially under the trade mark Araldite® PT91 0);
bisphenol A based epoxy resins (such as those available commercially under the trade designations GT 7004 or DER 692);
acrylic copolymers comprising glycidyl moieties obtained and/or obtainable from glycidyl (meth)acrylate, another (meth)acrylic monomer and, optionally, an ethylenically mono-unsaturated monomer (as described herein); and/or
beta-hydroxyalkylamides comprising at least one, preferably two, bis(beta-hydroxyalkyl)amide groups (such as those compounds described in US 4727111, the contents of which are hereby incorporated by reference).

In compositions of the present invention, acid-reactive hardener(s) may be present in an amount from about 0.25 to about 1.40, preferably from about 0.60 to about 1.05, equivalent of carboxy group in the composition for each equivalent of the total of epoxy and/or beta-hydroxyalkyl groups in the hardener.

### Hardeners that react with hydroxy

Hardeners that comprise groups that react with alcohols in the composition may be selected from: blocked isocyanate cross-linking agents.

Preferred blocked polyisocyanate cross-linkers may comprise any of the following and mixtures thereof:
cross-linkers based on isophorone di-isocyanates blocked with epsilon-caprolactam (such as those available commercially under the trade designations: Vestagon®B1530, Ruco®NI-2 and/or Cargill®2400);
cross-linker based on toluene-2,4-diisocyanates blocked with epsilon-caprolactam, (such as those available commercially under the trade designation Cargill® 2450);
phenol-blocked hexamethylene diisocyanates; and/or
adducts of the 1,3-diazetidine-2,4-dione dimer of isophorone diisocyanate and a diol, more preferred adducts having: a respective ratio of isocyanate to hydroxy groups from about (1 to 0.5) to about (1 to 0.9); a mole ratio of diazetidine dione to diol from about (2 to 1) to about (6 to 5), a free isocyanate content less than 8 % by weight of the adduct; a molecular weight from about 500 to about 4000 daltons; and a melting point from about 70° to 130°C (one example of such an adduct being commercially available under the name Vestagon®BF1540).

In compositions of the present invention, hydroxy-reactive hardener(s) (cross-linkers) may be present in an amount from about 0.3 to about 1.4, preferably from about 0.7 to about 1.2, equivalent of hydroxy group in the composition for each equivalent of (blocked) isocyanate group(s) in the hardener.

### Hardeners that react with epoxy

Hardeners that comprise groups that react with epoxy groups (for example glycidyl groups) in the composition may be selected from: polycarboxylic acids and/or polyanhydrides.

Preferred polycarboxylic acids may comprise:
acylic aliphatic polycarboxylic acids (such as adipic acid, pimelic acid, suberic acid, azelaic acid, sebacic acid, undecanedioic acid, tridecanedioic acid, tetradecanedioic acid, pentadecanedioic acid, hexadecanedioic acid, octadecanedioic acid, eicosanedioic acid, 1,10-dodecanedioic acid, docosanedioic acid and/or tetracosanedioic acid);
cyclic-aliphatic polycarboxylic acids (such as hexahydrophthalic acid, tetrahydrophthalic acid, 1,2-cyclohexanedicarboxylic acid, 1,3-cyclohexanedicarboxylic acid, and/or 1,4-cyclohexanedicarboxylic acid); and/or
aromatic polycarboxylic acids (such as isophthalic acid, phthalic acid and/or tri-mellitic acid), and/or suitable mixtures thereof.

Usefully carboxyl functional polyesters with a number average molecular weight of from about 1000 to about 10000 daltons may be used as epoxy-reactive hardeners. More usefully such polyester hardeners are semi-crystalline and/or amorphous.

In compositions of the present invention, epoxy-reactive hardener(s) may be present in an amount from about 0.5 to about 2.0, preferably from about 0.8 to about 1.2, equivalent of epoxy group in the composition for each equivalent of acid group(s) in the hardener.

### Hardeners that react with isocyanate

Hardeners that comprise groups that react with isocyanate groups in the composition may be selected from: monomeric polyols, polymeric polyols and/or mixtures thereof.

Preferred polyols for use as a hardener herein may comprise:
1,6-hexanediol, 1,4-cyclohexanediol, 1,4-cyclohexanedimethanol, 2-methyl-1,3-propanediol, hydrogenated bisphenol A, 2-butyl-2-ethyl-1,3-propanediol neopentyl glycol hydroxypivalate, trimethylolpropane, ditrimethylolpropane, pentaërythrytol and/or semi-crystalline and/or amorphous polyester polyols having a number average molecular weight of from 1000 to 10000 daltons.

In compositions of the present invention, isocyanate-reactive hardener(s) (cross-linkers) may be present in an amount from about 0.3 to about 1.4, preferably from about 0.7 to about 1.2, equivalent of isocyanate group in the composition for each equivalent of hydroxy group(s) in the hardener.

### Powder Composition

Powder compositions of the present invention may also comprise other various other additional ingredients well known to those skilled in the art such as those conventionally used in the manufacture of powder paints and varnishes for example photo-initiators, cure accelerators, pigments, inorganic fillers and the like. Examples of such ingredients are described in WO 98/18874 (for example page 14, line 28 to page 15 line 29). The powder compositions of the present invention may be prepared by dry blending the constituent ingredients or by other suitable well known methods such as those as described in WO 98/18874 (for example page 15, line 30 to page 16 line 11). The powder compositions may be applied to coat a substrate and cured in situ by any suitable method (such as those methods and substrates described in WO 98/18874 for example page 16, line 12 to page 16 line 32).

A characteristic of the dual-cure powder compositions of the present invention is that they comprise components (e.g. the unsaturated copolymer) with functional groups (for example (meth)acryloyl) which can be cross-linked by irradiation and also components (e.g. the polyester) with functional groups which can be cross-linked by a thermosetting reaction with a conventional hardener and/or the functional groups present on the unsaturated copolymer. The polyester may also comprise radiation curable groups.

Compositions according to the present invention, exhibit very good stability on storage and coatings can be obtained at low application temperatures (100 to 150°C). It is thus possible to obtain coatings on substrates which are more sensitive to heat, such as, for example, wood and plastics, and also coat substrates with a complicated three-dimensional shape, thus widening the potential end uses for these coatings. After curing, compositions of the invention provide coatings which exhibit good flexibility, better than that obtained with coatings containing an acrylic copolymer alone, without a polyester.

Another aspect of the invention provides a process for preparing the powder compositions of the invention comprising the step of mixing together the polyester component (a), the unsaturated copolymer (b), the hardener (c) and optionally an ethylenically unsaturated oligomer component (d), each component (a) to (d) being as described herein. The mixing can be performed in one or several steps, sequential for each ingredient, simultaneous or a combination thereof (e.g. (a) to (c) mixed together then (d))..

Many other variations embodiments of the invention will be apparent to those skilled in the art and such variations are contemplated within the broad scope of the present invention.

Further aspects of the invention and preferred embodiments and features thereof are given below and in the claims.

In still other embodiment the powder compositions of the invention additionally comprise a photo-initiator (and optionally a photo-activator) in an amount up to 15%, optionally from about 0.5% to about 8% by weight of the composition.

In accordance with the invention there is also provided a process for coating an article, comprising the steps of:
(i) applying to the article a radiation-curable powder composition according to any preceding claim, optionally by spraying with a triboelectric and/or electrostatic gun and/or by deposition in a fluidized bed,
(ii) melting the coating thus obtained by heating from about 100° to about 150°C for about 1 to about 30 minutes; and
(iii) exposing the molten coating to ultraviolet radiation and/or accelerated electron beams for a time sufficient to cure the coating.

Another aspect of the invention further provides powder varnishes and paints curable by irradiation with an accelerated electron beam and/or curable by ultraviolet irradiation, obtained from compositions of the invention as described herein.

In yet other aspect of the invention provides articles coated entirely or partially with varnishes and/or with paints of the invention as described herein.

### Examples

The present invention will now be described in detail with reference to the following non limiting examples which are by way of illustration only. Except when otherwise indicated, the parts mentioned in the examples are parts by weight.

Various registered trademarks, other designations and/or abbreviations are used herein to denote some of ingredients used to prepare polymers and compositions of the invention. These are identified below by chemical name and/or trade-name and optionally their manufacturer or supplier from whom they are available commercially. However where a chemical name and/or supplier of a material described herein is not given it may easily be found for example in reference literature well known to those skilled in the art: such as: 'McCutcheon's Emulsifiers and Detergents', Rock Road, Glen Rock, N.J. 07452-1700, USA, 1997 and/or Hawley's Condensed Chemical Dictionary (14th Edition) by Lewis, Richard J., Sr.; John Wiley & Sons.

As used herein:
'BAc' denotes n-butyl acetate;
'BETP' denotes the phosphonium salt ethyltriphenylphosphonium bromide;
'BMA' denotes 'n-butylmethacrylate';
'BTTO' denotes n-butyl tin trioctoate
'DBTL' denotes dibutyl tin dilaurate;
'DDA' denotes 1,12-dodecanedioic acid
'EGly' denotes ethylene glycol;
'GLY' denotes glycerol;
'GMA' denotes glycidyl methacrylate;
'HEMA' denotes 2- hydroxy ethyl methacrylate;
'IPDI' denotes isophorone di-isocyanate;
'IRG 2959' denotes the photo-initiator available commercially from Ciba-Geigy under the trade name Irgacure 2959;
'IRG 819' denotes the photo-initiator available commercially from Ciba-Geigy under the trade name Irgacure 819;
'MAA' denotes methacrylic acid (CH₂=C(CH₃)CO₂H).
'MEHQ' denotes 4-methoxyphenol (also known as methoxy hydroquinone or hydroquinone monomethylether);
'MMA' denotes methyl methacrylate;
'P6000' denotes the fluidity-regulating agent available commercially from Cytec under the trade name Modaflow P6000;
'PTZ' denotes phenothiazine;
'STY' denotes styrene,
't-BHQ' denotes di- tert.-butylhydroquinone;
'TBP' denotes tributyl phosphite
'TMP' denotes trimethylolpropane;
'TNPP' denotes tris(nonylphenyl) phosphite; and
'Trigonox®C' denotes the initiator tert-butyl peroxy benzoate commercially available from Akzo-Nobel under this trademark.

### Example 1.

### Synthesis of unsaturated acrylic copolymer

### First step (1.1)

BAc (394.09 parts) is added to a reaction vessel under an inert nitrogen atmosphere which is maintained by a mild gas flow through the vessel. In another vessel a monomer mixture of STY (98.52 parts); GMA (98.52 parts), BMA (147.79 parts) and MMA (147.79 parts) is prepared. Separately a initiator mixture of Trigonox^{®}C (14.77 parts) dissolved in BAc (98.59 parts) is also prepared. The reactor vessel is heated to 125°C and held at that temperature whilst the initiator mixture is slowly added to the vessel over 215 minutes. Five minutes after the start of the initiator mixture addition the monomer mixture is also slowly added to the vessel over 180 minutes. The reaction mixture is held at 125°C for a further 100 minutes after the initiator mixture has been completely added, and then heated to 175°C at a reduced pressure of 600 mbar for 30 minutes. The mixture is maintained at 175°C whilst the pressure is reduced to 50 mbar for further 90 minutes to obtain as a product a copolymer characterised as follows:
Mₙ (measured by GPC with calibrated by a polystyrene standard) = 4707 daltons; M_{w} = 12739 daltons; polydispersity = 2.7; Tg (measured by DSC) = 45°C; epoxy content = 855 g per equivalent; and dynamic fluid viscosity (as measured at 175°C by a Brookfield viscometer) = 6530 mPa.s.

### Second step: (1.2)

An amount (933.01 parts) of the copolymer prepared as described in the first step is added to a five litre, round bottom flask which is electrically heated with a thermoregulator. A source of air is immersed in the mixture. Air is supplied to the flask whilst it is heated until the mixture reaches 160°C when MEHQ (0.99 parts), BETP (2.48 parts) and PTZ (0.30 parts) are added to the resin mass. The mixture is stirred for a further 30 minutes until homogenous. A separate mixture of MAA (61.23 parts), MEHQ (0.99 parts) and TNPP (0.99 parts) is prepared. The heating to reaction flask is switched off, and the MMA mixture is added to the flask over 30 minutes using a piston pump. The temperature of the reaction mixture is observed to slowly decrease to 140°C. Forty minutes after the MAA mixture has been completely added, the acid number of the reaction mixture is titrated and once it reaches less than 5 mg KOH/g the reaction is stopped. The methacrylated copolymer obtained is characterised as follows:
an unsaturated equivalent weight = 1.4 kg / equivalent; Tg (measured by DSC) = 44°C, Mₙ = 4663 daltons; M_{w}:= 13458 daltons.

### Example 2:

### Synthesis of a carboxyl functional semi-crystalline polyester

EGly (200.57 parts), DDA (798.54 parts) and BTTO (1 part) are added to a conventional four neck round bottom flask equipped with a stirrer, a distillation column connected to a water cooled condenser, an inlet for nitrogen and a thermometer attached to a thermoregulator. The flask contents are heated, while stirring under nitrogen, to an approximate temperature of 230°C. Water is distilled from the reactor once the temperature reaches 180°C. When distillation under atmospheric pressure has stopped, a vacuum of 50 mm Hg is gradually applied to obtain a product with the following characteristics:
Acid number = 32 mg KOH / g; Hydroxy number = 2 mg KOH / g; Brookfield viscosity at 100°C (measured using a cone / plate) = 1 Pa.s; Tₘ (measured by DSC quenched at 20° / minute)= 85° C; Mₙ:(GPC) = 3300 daltons

### Example 3:

### Synthesis of an unsaturated semi-crystalline polyester

EGly (182.45 parts), DDA (784.38 parts), TMP (19.58) and BTTO (1 part) are reacted with the carboxyl functional polyester prepared as described in Example 2 to obtain another carboxyl functionalised polyester. The polyester so obtained is cooled to 150°C and t-BHQ (0.30 parts), TBP (0.22 parts) and BETP (0.70 parts) are added. GMA (11.37 parts) is then slowly added (over 30 minutes) while the mixture is stirred under oxygen. One hour after the addition is complete a methacryloyl unsaturated polyester is obtained having the following characteristics:
Acid number = 20 mg KOH / g; an unsaturated equivalent weight = 5.8 kg / equivalent; Brookfield viscosity at 100°C (measured using a cone / plate) = 4.3 Pa.s; Tₘ (measured by DSC quenched at 20° / minute) = 78° C; and Mₙ (GPC)= 4000 daltons.

### Example 4:

### Synthesis of an unsaturated semi-crystalline polyester

EGly (162.63 parts), DDA (782.24 parts), TMP (34.73) and BTTO (1 part) are reacted with the carboxyl functional polyester prepared as described in Example 2 to obtain another carboxyl functionalised polyester. The polyester so obtained is cooled to 150°C and t-BHQ (0.45 parts), TBP (0.25 parts) and BETP (0.70 parts) are added. GMA (18.16 parts) is then slowly added (over 30 minutes) while the mixture is stirred under oxygen. One hour after the addition is complete a methacryloyl unsaturated polyester is obtained having the following characteristics:
Acid number = 33 mg KOH / g; an unsaturated equivalent weight = 3.5 kg / equivalent; Brookfield viscosity at 100°C (measured using a cone / plate) = 1.8 Pa.s; Tₘ (measured by DSC quenched at 20° / minute) = 74° C; and Mₙ (GPC)= 4000 daltons.

### Example 5 :

### Synthesis of an unsaturated polyurethane

A mixture of 'IPDI' (666 parts with NCO content = 37.5%), DBTL (1 part) and MEHQ (3 parts) is heated to 65°C and HEMA (371 parts) is added dropwise and the mixture stirred until the NCO content reaches 13%. Whilst the mixture is stirred vigorously, GLY (103 parts) is added slowly over one hour, ensuring that the reaction temperature does not exceed 120° to 130°C. The mixture is stirred for one hour at 120° to 130°C to obtain a resin having the following characteristics:
An unsaturated equivalent weight = 475 g / equivalent; Tg (measured by DSC quenched at 20° / minute) = 59° C; and Brookfield viscosity at 140°C = 60 Pa.s.

### Examples 6 to 8:

### Powder compositions

Powder composition comprising the resins prepared in Examples 1 to 5 may be prepared from a binder comprising the resins shown in Table 1 mixed with other additives as described below.

**Table 1 (binders used to prepare powder compositions Examples 6 to 8)**

| | Acrylic copolymer | Polyester | Unsaturated oligomer |
|---|---|---|---|
| Ex 6 | 90.5 parts of Ex 1 | 5 parts of Ex 2 | |
| Ex 7 | 86.0 parts of Ex 1 | 9.5 parts of Ex 3 | |
| Ex 8 | 80.5 parts of Ex 1 | 5 parts of Ex 4 | 10 parts of Ex 5 |

Each of the powder compositions can be prepared by dry mixing the binder ingredients in Table 1 to together a thermosetting hardener (4.5 parts DDA), a photo-initiator (2.50 parts of a mixture of IRG 2959 to IRG 819 in the respective weight ratio 4:1), and a fluidity-regulating agent (0.5 parts P6000). The resultant mixture is homogenized at a temperature of between 80° to 100°C, in a 16 mm Prism twin-screw extruder, with L/D = 15/1. The extrudate is cooled and ground in a Retsch ZM 100 grinder, with a mesh size of 0.5 mm and then passed through a sieve to obtain a powder composition having particles of between 20 and 100 micrometres in size.

### Coating

The powders compositions prepared as described above are applied by means of an electrostatic spray gun at a voltage of 70 kV to silver metallic base-coated, CED coated steel panels (OEM-quality) at a film thickness of 30 to 40 micrometres. The deposited coatings are then cured in one of two ways (Trials 1 & 2).

### Trial one

In a first set of trials each of the coatings are melted by heating with medium-wavelength infrared radiation (Hereaus carbon IR emitter, with an irradiation density of 80 kW / m²) and convection heater at a temperature of 130°C for approximately 20 minutes.

### Trial two

In a second set of trials, the coatings are first melted by heating at 130°C for 20 minutes, and then are irradiated with the ultraviolet light emitted by 100 W/cm medium-pressure mercury vapour UV lamps (available commercially under the trade designation DQ 1023 from the company Heraeus Instruments GmbH), at a distance of 15 cm for 2 seconds.

The cured coatings thus obtained were tested conventionally and the results are reported below, in Table 2 for Trial one (thermoset only) and in Table 3 for Trial two (dual cure).
In each Table the data in the columns from left to right is as follows:
the first column identifies the application example tested;
the second column reports a visual assessment of the coating, according to which "good" means that the cured coating possesses a smooth and glossy appearance, without apparent defects such as craters, pinholes and the like, "medium" means that the cured coating exhibits an orange peel appearance with a gloss, measured at an angle of 20°, which is less than 80% and surface defects;
the third column indicates the value of the resistance to direct (DI) and reverse (RI) impact, in kg.cm, according to ASTM standard D2795;
the fourth column indicates the value of the pencil hardness at an angle of 45°, with a force of 7.5 Newtons, measured according to ASTM standard D3363-92A;
the fifth column indicates the resistance to methyl ethyl ketone, which corresponds to the number of twofold rubbing movements (to and fro) with a cotton wool pad impregnated with methyl ethyl ketone which does not detrimentally affect the appearance of the surface of the cured film;
the sixth column indicates the classification value for the cross-cut adhesion on silver metallic base-coated, CED coated steel panels (OEM-quality) by tape test according to ASTM D3359 according to which
   5B: the edges of the cuts are completely smooth; none of the squares of the lattice is detached
   4B: small flakes of the coating are detached at intersections; less than 5% of the area is affected
   3B: small flakes of the coating are detached along edges and at intersections of cuts; the area affected is 5 to 15% of the lattice
   2B: the coating has flaked along the edges and on parts of the squares; the area affected is 15 to 35% of the lattice
   1B: the coating has flaked along the edges of cuts in large ribbons and whole squares have detached; the area affected is 35 to 65% of the lattice
   0B: flaking and detachment worse than grade 1

**Table 2 (Trial 1 - thermoset only)**

| Powder | Aspect/gloss20° | DI/RI | Hardness | MEK resist | Adhesion |
|---|---|---|---|---|---|
| Example 6 | Good /85 | 20/20 | H | 100 | 3-4 B |
| Example 7 | Good/88 | 40/20 | H | 120 | 5B |
| Example 8 | Good/89 | 20/20 | 2H | 120 | 4B |

**Table 3 (Trial 2 - dual cure)**

| | Aspect/gloss20° | DI/RI | Hardness | MEK resist | Adhesion |
|---|---|---|---|---|---|
| Example 6 | Good /84 | 40/40 | 3H | 200+ | 5B |
| Example 7 | Good/89 | 40/20 | 2H | 200+ | 5B |
| Example 8 | Good/89 | 40/40 | 3H | 200+ | 5B |

These results clearly show that the powder compositions of invention produce coatings which possess good characteristics upon thermal curing at low temperature (130°C). These properties are visibly improved upon UV irradiation of the heated coating (at 130°C). Compositions of the invention can produce coatings with acceptable to good characteristics without irradiation so are suitable for complicated three-dimensional structures with hidden parts (such as exist in automotive applications).

## Claims

1. A powder composition curable by radiation and thermally, comprising a mixture of:
(a) from about 1% to about 15% by weight of the total composition, of a polyester having a glass transition temperature (Tg) less than or equal to about 40°C, where the polyester is obtained and/or obtainable by reacting,
(i) an acid component comprising:
(A) from about 70 to about 100 mol % of a first poly carboxylic acid; and
(B) from about 0 to about 30 mol % of an optional second poly carboxylic acid different from the first poly carboxylic acid;
with
(ii) an alcohol component comprising
(A) from about 70 to about 100 mol % of a first polyol; and
(B) from about 0 to about 30 mol % of an optional second polyol different from the first polyol;
and optionally with
(iii) one or more functional monomer(s) selected from:
glycidyl (meth)acrylate(s), hydroxy functional (meth)acrylate(s), polyisocyanate(s) and/or suitable mixtures thereof;
(b) from about 85% to about 99% by weight of the total composition, of a copolymer comprising at least one activated unsaturated moiety; and
(c) a hardener capable of reacting with the acrylic copolymer and/or the polyester when heated.

2. A powder composition as claimed in claim 1, in which the first poly carboxylic acid comprises C₄₋₃₀dicarboxylic acid and/or the first polyol comprises a C₂₋₃₀diol.

3. A powder composition as claimed in any preceding claim, where the copolymer comprising activated unsaturated moie(ties) is an first acrylic copolymer obtained and/or obtainable by reacting a second acrylic copolymer with a further polymer precursor where:
(i) the second acrylic copolymer is obtained and/or obtainable by reacting
(A) from about 40 % to about 95 mol % of at least one first polymer precursor comprising a (meth)acryloyl group;
(B) from about 5% to about 60 mol % of at least one second polymer precursor comprising an ethylenically unsaturated group; and
(C) a third component selected from at least one, polymerization initiator (PI); optional chain transfer agent (CTA) and from about 5% to about 60 mol %, of at least one third polymer precursor comprising
a) an ethylenically unsaturated group; and
b) a first reactive moiety capable of undergoing an addition and/or condensation reaction with the further (fourth) polymer precursor, optionally the first reactive moiety being selected from: epoxy, carboxy, hydroxy and/or isocyanato groups,
where the mol % of the first (A), second (B) and third (C) polymer precursors above are calculated with respect to the total amount of the first and second polymer precursors ((A) and (B)); and
(ii) the further (fourth) polymer precursor comprises
a) one or more ethylenically unsaturated group(s); and
b) a second reactive moiety capable of undergoing an addition and/or condensation reaction with the first reactive moiety of the third polymer precursor that formed, or was capable of forming, the second acrylic copolymer.

4. A powder composition as claimed in claim 3, in which the first polymer precursor comprises one or more (meth)acrylate(s) optionally substituted by one or more optionally substituted C₁₋₈hydrocarbo, polysiloxane and/or caprolactone group(s).

5. A powder composition as claimed in either claim 3 or 4, where the second polymer precursor is selected from the group consisting of: one or more optionally substituted C₄₋₂₀hydrocarbylene, optionally substituted C₆₋₂₀hydrocarbo aromatic compounds and/or mixtures thereof.

6. A powder composition as claimed in any of claims 3 to 5, in which the first reactive moiety of the third component comprises a functional group capable of undergoing an addition or condensation reaction with the further (fourth) polymer precursor, the functional group selected from: glycidyl, carboxyl, hydroxyl, isocyanato and mixtures thereof.

7. A powder composition as claimed in any of claims 3 to 6, in which the third component comprises a third polymer precursor selected from the group consisting of: glycidyl (meth)acrylate, (meth)acrylic acid, hydroxyethyl (meth)acrylate, 2-isocyanatoethyl (meth)acrylate, (meth)acryloyl isocyanate, 1-(1-isocyanato-1-methylethyl)-3 -(1-methylethenyl) benzene, maleic anhydride , tetrahydrophthalic anhydride and mixtures thereof.

8. A powder composition as claimed in any preceding claim where the hardener comprises any of the following functional groups:
at least two glycidyl- or beta-hydroxyalkylamide groups capable of reacting with carboxy groups on the first acrylic copolymer and/or a partially or completely (meth)acrylated polyester;
at least two carboxylic acid groups capable of reacting with epoxy (preferably glycidyl) groups on the first acrylic copolymer;
at least two blocked or non-blocked isocyanate groups capable of reacting with hydroxy groups on the first acrylic copolymer and/or a partially or completely (meth)acrylated polyester; and/or
at least two hydroxyl groups capable of reacting with isocyanate groups on the first acrylic copolymer.

9. A process for coating an article, comprising the steps of:
(i) applying to the article a radiation-curable powder composition according to any preceding claim, optionally by spraying with a triboelectric and/or electrostatic gun and/or by deposition in a fluidized bed,
(ii) melting the coating thus obtained by heating from about 100° to about 150°C for about 1 to about 30 minutes; and
(iii) exposing the molten coating to ultraviolet radiation and/or accelerated electron beams for a time sufficient to cure the coating.

10. Powder varnishes, paints and/or coated articles curable by irradiation with an accelerated electron beam and/or ultraviolet irradiation, obtained from compositions according to any of claims 1 to 8.
